Europäisches Patentamt

European Patent Office

Office européen des brevets

(19)

(11) Publication number: **0 448 746 A1**

# EUROPEAN PATENT APPLICATION

(21) Application number: **90105733.1**

(22) Date of filing: **26.03.90**

(51) Int. Cl.⁵: **C09D 5/44**

(43) Date of publication of application:
**02.10.91 Bulletin 91/40**

(84) Designated Contracting States:
**BE DE ES FR GB IT NL SE**

(71) Applicant: **BASF Corporation**
**1419 Biddle Avenue**
**Wyandotte, Michigan 48192-3736(US)**

(72) Inventor: **Clark, Peter D.**
**25888 Rutledge Crossing**
**Farmington Hills, 48331, Michigan(US)**
Inventor: **Wold, Gerald G.**
**3206 Old Orchard**
**Brighton, 48116, Michigan(US)**

(74) Representative: **Baillie, Iain Cameron et al**
**c/o Ladas & Parry Isartorplatz 5**
**W-8000 München 2(DE)**

(54) Cathodic electrocoat primer containing water insoluble organo-lead compounds as corrosion inhibitors.

(57) Cathodic, aqueous, electrodepositable resin compositions containing organo-lead compositions. The organo-lead compositions comprise water insoluble lead salts of aliphatic acids having at least six carbon atoms or water insoluble lead salts of aromatic carboxylic acids. The coating compositions, coating baths, coated articles and processes of this invention do not require lead pigments or soluble lead, yet the coatings have outstanding corrosion resistance. The use of the organo-lead compounds also eliminates the need for separate catalysts in the electrodeposition coating compositions, coating baths and processes.

EP 0 448 746 A1

Technical Field

The field of art to which this invention pertains is electrodepositable resin compositions and, more specifically, electrodepositable resin compositions containing cross-linking agents for use in cathodic electrodeposition coating processes.

Background of the Invention

The electrodeposition of aqueous cationic resin compositions onto conductive substrates is well known in the coating arts. It is standard operating practice among automobile manufactures to coat automobile frames and sheet metal with anti-corrosive, electrodeposited, cathodic, aqueous film-forming resin compositions which are cured to a hard, durable, protective coatings. The use of electrocoat primer coatings has enabled automobile manufacturers to provide extended warranties covering body corrosion. These electrocoat coatings are also used by manufacturers of various products including trucks, construction equipment, appliances, automobile parts, etc.

In a typical cathodic electrodeposition process, an aqueous bath is prepared from a principal resin solution or emulsion and a pigment paste. The principal resin solution or emulsion typically comprises an epoxy-amine resin adduct or an acrylic polymer containing amine functional monomers which can be salted with an acid to solubilize the principal resin in water, and a cross-linking agent. Typical cross-linking agents include the blocked polyisocyanates and aminoplast crosslinkers . The pigment paste typically comprises a mixture of a specifically designed and formulated epoxy-amine resin adduct (known as a grind resin), which has been salted with an acid, and a pigment. The grind resin and pigment are ground together to form a pigment paste. The pigment paste is mixed with the principal emulsion and distilled water at the coating site to form an aqueous coating bath having the desired solids concentration. The aqueous coating bath is typically contained within an insulated tank having sufficient capacity to completely immerse all articles that will be coated therein. Additives conventional in the art such as organic coalescent solvents may be added to the bath to improve coating characteristics.

An article which is to be coated typically comprises an electrically conductive material. The article is connected to a direct current circuit to act as a cathode. The tank contains an anode or serves, itself, as the anode of the DC circuit. When the object is immersed in the coating bath (contained within the coating tank), a flow of electricity across the object causes the principal emulsion and pigment paste to be deposited on the surfaces of the article along with any additives. The article is typically removed from the bath when the desired thickness of film has been deposited, after which the article is optionally washed with distilled water. The article having the deposited film is then typically placed in an oven where the film is cured to a smooth, hard, durable, cross-linked coating.

Cathodic electrodepositable amine-epoxy resin adduct compositions, methods of manufacturing these cathodic electrodepositable resin compositions, aqueous cationic electrodeposition baths processes for the deposition of these resins from a coating bath onto a conductive object ar disclosed in U.S. Patent Nos. 3,984,299, 3,468,770, 4,116,900, 4,093,594, 4,137,140, 4,104,147, 4,225,478, 4,419,467, and 4,432,850, 4,575,523, and 4,575,524, which are incorporated by reference. Cathodic, electrodeposition acrylic resin compositions, methods of manufacture, aqueous cationic coating baths, and methods of electrodeposition of these compositions are disclosed in U. S. Patent Nos. 3,883,483 and 3,853,803 which are incorporated by reference.

Cathodic electrodepositable resin coatings, also known as "Electrocoats" or "E-Coats," provide a metal substrate with a superior corrosion-resistant primer coating. It is known that cationic E-Coats provide superior protection to a steel substrate in comparison to anodic resin compositions. In the automotive industry, these coatings are typically overcoated with a decorative and protective multi-layer top coating such as the industry's standard inner base coat and a clear outer top coat coating system.

It is the practice in the art to include lead pigments in electrocoat coating baths, typically lead silicate and lead silico-chromate and/or lead chromate. The lead is believed to serve as an anticorrosive agent. It is deposited with the cathodic E-Coat and enhances the corrosion inhibiting characteristics of the E-Coat. However, there are disadvantages presently associated with the use of lead compounds in cathodic electrocoat processes. First of all, lead compounds are typically introduced into E-Coat coatings baths through the inclusion of lead pigments in the coating baths. The lead pigments tend to settle out and foul bath tanks, piping, pumps, filters and associated equipment.

Setting of lead pigment results in dirt in electrodepositable films and also results in sludge accumulations in tanks and process equipment. This sludge must be disposed of as a waste material. There have been attempts to remove lead pigments from coating baths. Cathodic coating baths containing soluble lead salts are disclosed in U.S. Patent No. 4,115,226. The level of soluble lead salts such as lead acetate and lead lactate is difficult to control in a coating bath containing soluble lead. Typically excessive levels of water-borne lead are present producing higher than acceptable conductivity, resulting in inadequate coating bath throw power and unacceptable coatings. In addition, lead pigments cannot be introduced into a coating bath as a dry pigment. They must be ground with specially designed and formulated E-Coat grind resins to form lead additive pastes or lead-containing pigment pastes. The lead-additive pastes are then added to the cathodic E-Coat coating baths. The grinding process is typically a dusty operation and extensive environmental controls are necessary to prevent workers from exposure to airborne lead particulates.

A tin catalyst such as dibutyl tin oxide is typically added to an aqueous cathodic electrodeposition coating bath to catalyze the cross-linking reaction. The catalyst is a dry powder which must be added to the E-Coat coating bath as part of a pigment paste. The catalyst is extremely difficult to grind and disperse in a pigment paste. In addition, the catalyst is difficult to maintain in suspension in the aqueous coating bath and tends to settle out. Tin catalysts of the liquid type such as dibutyl tin dilaurate are suspected as crater causing agents.

What is needed in this are cathodic electrocoat coating compositions, coating baths and methods of coating which do not require solid lead pigments, water soluble lead compounds, or tin catalysts.

Disclosure of the Invention

Novel aqueous, cathodic, electrodepositable resinous coating compositions are disclosed. The coating compositions comprise an electrodepositable principal resin composition, a cross-linking agent, and an organolead compound comprising a water insoluble lead salt of an aliphatic acid having at least six carbon atoms or a water insoluble lead salt of an aromatic carboxylic acid. As used throughout this disclosure and the appended claims, the term "insoluble lead salt" denotes lead salts that possess solubilities of 0.05 parts or less per 100 parts of water at 25° C. The coating compositions, when deposited as a film on a conductive substrate in an aqueous, cathodic electrodeposition process, and cured to a hard, durable coating, have excellent corrosion resistance without the need for lead pigments or tin catalysts.

Another aspect of the present invention is an article coated with an aqueous, cathodic electrodepositable principal resinous coating composition. The coating composition comprises an electrodepositable principal resin composition, a cross-linking agent, and an organo-lead compound comprising a water insoluble lead salt of an aliphatic acid having at least 6 carbon atoms or a water insoluble lead salt of an aromatic carboxylic acid. The coating composition when deposited as a film onto the article in a cathodic electrodeposition process has excellent corrosion resistance without the need for lead pigments or tin catalysts.

Yet another aspect of the present invention is an aqueous, cathodic electrodeposition coating bath. The coating bath comprises an acid-salted cathodic, electrodepositable principal resin composition, a cross-linking agent, and an organo-lead compound comprising a water insoluble salt of an aliphatic acid having at least six carbon atoms or a water insoluble salt of an aromatic carboxylic acid. A coating electrodeposited from the bath onto a substrate and cured to a hard, durable, film has excellent corrosion resistance without the need for lead pigments or tin catalysts.

Yet another aspect of the present invention is an improved method of cathodic electrodeposition of aqueous coating compositions. The method comprises forming an aqueous, cathodic electrodeposition coating bath wherein the coating bath comprises an aqueous, cationic electrodepositable principal resin composition and a cross-linking agent. The bath is contained in an electrically insulated vessel containing an anode. Then an electrically conductive article, connected to an electric circuit to act as a cathode, is immersed in the bath and sufficient electrical power is caused to flow across the article so that a film of coating composition is deposited on the surfaces of the article. Then the article is removed from the coating bath and the film is cured to a hard, durable coating. The improvement comprises including at least one organo-lead compound in the coating bath. The organo-lead compound comprises a water insoluble lead salt of an aliphatic acid containing at least six carbon atoms or a water insoluble lead salt of an aromatic, carboxylic acid. The resulting coatings containing the organo-lead compounds have excellent corrosion resistance and cure to hard, durable coatings without the need for lead pigments or tin catalysts.

The foregoing, and other features and advantages of the present invention will become more apparent from the following description.

BEST MODE FOR CARRYING OUT THE INVENTION

The organo-lead compounds of the present invention include the water insoluble lead salts of aliphatic acids having at least six carbon atoms and water insoluble lead salts of aromatic carboxylic acids. The lead compounds may be liquids or they may be solids which are soluble in organic medium or solids which form liquid like pastes when mixed with a suitable organic medium, such as a solvent or oil. Particularly preferred lead salts include lead 2-ethyl hexanoate, lead naphthenate, lead octanaote, lead stearate, lead dodeconoate, and lead oleate.

Useful blocked polyisocyanates for use in the coating compositions of the present invention as cross-linking agents include those which are stable in the dispersion systems at ordinary room temperature and which react with the resinous product of this invention at elevated temperatures.

In the preparation of the blocked organic polyisocyanates, any suitable organic polyisocyanate can be used. Representative examples are the aliphatic compounds such as trimethylene, tetramethylene, pentamethylene, hexamethylene, 1,2-propylene, 1,2-butylene, and 1,3-butylene diisocyanates; 3-isocyanatomethyl-3,5,5-trimethylcyclohexylisocyanate; the aromatic compounds such as m-phenylene, p-phenylene, 4,4'-diphenyl, and 1,4-xylylene diisocyanates; the triisocyanates such as triphenyl methane-4,4'4'-triisocyanate, 1,3,5-benzene triisocyanate and 2,4,6-toluene triisocyanate; and the tetraisocyanates such as 4,4'-diphenyldimethyl methane-2,2',5,5'-tetraisocyanate; the polymerized polyisocyanates such as toluene diisocyanate dimers and trimers, polymethylenepolyphenylene polyisocyanates having -N=C=O functionalities of 2 to 3, and the like.

In addition, the organic polyisocyanate can be a prepolymer derived from a polyol such as glycols, e.g. ethylene glycol and propylene glycol, as well as other polyols such as glycerol, trimethylolpropane, hexanetriol, pentaerythritol, and the like, as well as monoethers, such as diethylene glycol, tripropylene glycol and the like and polyethers, i.e., alkylene oxide condensates of the above. Among the alkylene oxides that may be condensed with these polyols to form polyethers are ethylene oxide, propylene oxide, butylene oxide, styrene oxide and the like. These are generally called hydroxy-terminated polyethers and can be linear or branched. Especially preferred are polyols such as ethylene glycol, diethylene glycol, triethylene glycol, 1,4-butylene glycol, 1,3-butylene glycol, 1,6-hexanediol, and the mixtures; glycerol, trimethylolethane, trimethylolpropane, 1,2,6-hexanetriol, pentaerythritol. dipentaerythritol, tripentaerythritol, polypentaerythritol, sorbitol, methyl glucosides, sucrose and the like with alkylene oxides such as ethylene oxide, propylene oxide, their mixtures, and the like.

Particularly preferred polyisocyanates include the reaction product of toluene diisocyanate and trimethylol propane and, the isocyanurate of hexamethylene diisocyanate (trimer of 1,6-hexamethylene diisocyanate).

The blocking agents which can be used to block the polyisocyanates and polyether polyol polyisocyanate adducts are those known in the art. Any suitable aliphatic, cycloaliphatic, aromatic, alkyl monoalcohol and phenolic compounds and secondary amine compounds can be used as a blocking agent in the practice of the present invention, including lower aliphatic alcohols, such as methyl, ethyl, chloroethyl, propyl, butyl, amyl, hexyl, heptyl, octyl, nonyl, 3,3,5-trimethylhexyl, decyl and lauryl alcohols, and the like; the aromatic-alkyl alcohols such as phenylcarbinol, the monoethyl, monobutyl and monopropyl ethers of ethylene glycol and the like; the phenolic compounds such as phenol itself, substituted phenols in which the substituents do not adversely affect the coating operations. Examples of the latter include cresol, nitrophenol, chlorophenol tertiary butyl phenol, secondary amines such as dibutyl amine, and hydroxy containing esters.

Preferred blocking agents include the monopropyl ether of ethylene glycol and dibutyl amine. Additional blocking agents include tertiary hydroxyl amines, such as diethylethanolamine and oximes, such as methylethyl ketoxime, acetone oxime and cyclohexanone oxime, and caprolactam. Another preferred oxime is methyl-n-amyl ketoxime.

The cathodic electrodepositable principal resin compositions of this invention comprise epoxy resins which are reacted with amines to form adducts, and amine functional acrylic copolymers. The epoxy resins may be optionally chain-extended resulting in an increase in the molecular weight of the epoxy molecules by reacting with water miscible or water soluble polyols.

The epoxides useful in the practice of this invention are the polyepoxides typically used in this art and comprise a resinous material containing at least one epoxy group per molecule.

The aminoplast crosslinking agents useful in the practice of the present invention include: alkylated melamine-formaldehyde resins, including such melamine-formaldehyde resins which are characterized as being one of the following types: highly methylated, partially methylated and containing methylol functionality, methylated and containing imino functionality, highly butylated, partially butylated and containing methylol functionality, butylated and containing imino functionality, mixed methylated/butylated, mixed methylated/butylated containing methylol functionality, mixed methylated/butylated and containing imino functionality, or such other melamines as could be envisioned by exhaustive or partial etherification with an

4

alcohol of the reaction product of 1-6 moles of formaldehyde for every mole of melamine. Examples of suitable melamine-formaldehyde resins which are commercially available include Cymel 300, Cymel 301, Cymel 303, Cymel 350, Cymel 323, Cymel 325, Cymel 327, Cymel 370, Cymel 373, Cymel 380, Cymel 385, Cymel 1116, Cymel 1130, Cymel 1133, Cymel 1168, Cymel 1156, Cymel 1158, from the American Cyanamid Company (Plastics Division, Wallingford, CT 06492), and Resimene 891, Resimene 882, Resimene 881, Resimene 879, Resimene 876, Resimene 875, Resimene 872, Resimene 747, Resimene 746, Resimene 745, Resimene 741, Resimene 740, Resimene 735, Resimene 731, Resimene 730, Resimene 717, Resimene 714, Resimene 712, Resimene 764, Resimene 755, Resimene 753, Resimene 750, from the Monsanto Company (St. Louis, MO 63166). The aminoplast crosslinking agents that are useful in the practice of the present invention also include Benzoguanamine-formaldehyde resins which have been partially or fully etherified with a suitable alcohol, typically methanol or butanol or a mixture thereof, and which may also contain methylol functionality and/or imino functionality. An example of this type of crosslinking agent would include the commercial product Cymel 1123 from the American Cyanamid Company.

The aminoplast crosslinking agents that are useful in the practice of this invention also include glycolurilformaldehyde resins which have been partially or fully etherified with a suitable alcohol, typically methanol or butanol or a mixture thereof, and which may also contain methylol functionality and/or imino functionality. Examples of commercially available crosslinking agents of this type include Cymel 1170, Cymel 1171, and Cymel 1172 from the American Cyanamid Company.

The aminoplast crosslinking agents that are useful in the practice of this invention also include urea-formaldehyde resins which have been partially or fully etherified with a suitable alcohol, typically methanol or butanol, and which may also contain methylol functionality and/or imino functionality. Examples of commercially available crosslinking agent of this type include Beetle 55, Beetle 60, Beetle 65, and Beetle 80 from the American Cyanamid Company and Resimene 960, Resimene 975, Resimene 970, Resimene 955, Resimene 933, Resimene 920, Resimene 918, Resimene 915, Resimene 907, Resimene 901, Resimene 980, from the Monsanto Company.

The aminoplast crosslinking agents that are useful in the practice of this invention also include carboxyl modified aminoplast resin. These crosslinking agents would include melamine-formaldehyde, benzoguanamine-formaldehyde, glycolurilformaldehyde, and urea-formaldehyde type crosslinking agents that include carboxylic acid functionality as well as alkoxymethyl functionality, typically methoxymethyl, ethoxymethyl, and butoxymethyl, or a mixture thereof, and which may also contain methylol functionality and/or imino functionality. Examples of commercially available crosslinking agents of this type include Cymel 1141 and Cymel 1125 from the American Cyanamid Company.

A particularly useful class of polyepoxides are the glycidyl polyethers of polyhydric phenols. Such polyepoxide resins are derived from an epihalohydrin and a dihydric phenol and have an epoxide equivalent weight (EEW) of about 400 to about 4,000. Examples of epihalohydrins are epichlorohydrin, epibromohydrin and epiiodohydrin with epichlorohydrin, epibromohydrin and epiiodohydrin with epichlorohydrin being preferred. Dihydric phenols are exemplified by resorcinol, hydroquinone, p,p'-dihydroxydiphenylpropane (or bisphenol A as it is commonly called), p,p'-dihydroxybenzophenone, p,p'dihydroxydiphenylethane, *bis*-(2-hydroxynaphthyl)methane, 1,5-dihydroxynaphthylene and the like, with bisphenol A being preferred. These polyepoxide resins are well known in the art and are made in desired molecular weight by reacting the epihalohydrin and the dihydric phenol in various ratios or by reacting a dihydric phenol in various ratios or by reacting a dihydric phenol with a lower molecular weight polyepoxide resin. Particularly preferred polyepoxide resins are glycidyl polyethers of bisphenol A having epoxide equivalent weights of about 450 to about 2,000, more typically about 800 to about 1,600, and preferable about 800 to about 1,500. The polyepoxides used in the practice of this invention will have a relatively high molecular weight, that is, typically about 1,600 to about 3,200, and preferably about 1,600 to about 2,800.

Another quite useful class of polyepoxides are produced similarly from novolak resins or similar polyphenol resins.

Also suitable are the polyepoxides comprising similar polyglycidyl ethers of polyhydric alcohols which may be derived from such polyhydric alcohols as ethylene glycol, diethylene glycol, triethylene glycol, 1,2-propylene glycol, 1,4-propylene glycol, 1,5-pentanediol, 1,2,6-hexanetriol, glycerol, *bis*-(4-hydroxycyclohexyl)-2,2-propane and the like. There can also be used polyglycidyl esters of polycarboxylic acids, which are produced by the reaction of epichlorohydrin or similar epoxy compounds with an aliphatic or aromatic polycarboxylic acid terephthalic acid, 2,6,-naphthalenedicarbocylic acid, dimerized linolenic acid and the like. Examples are glycidyl adipate and glycidyl phthalate. Also useful are polyepoxides derived from the epoxidation of an olefinically unsaturated alicyclic compound. Included are diepoxides comprising in part one or more monoepoxides. These polyepoxides are nonphenolic and are obtained by the

EP 0 448 746 A1

epoxidation of alicyclic olefins. For example, by oxygen and selected method catalysts, by perbenzoic acids, by acetaldehyde monoperacetate, or by peracetic acid. Among such polyepoxides are the epoxy alicyclic ethers and esters which are well known in the art.

Other epoxy-containing compounds and resins include nitrogenous diepoxides such as disclosed in U.S. Patent No. 3,365,471; epoxy resins from 1,1-methylene *bis*-(5-substituted hydantoin), U.S. Patent No. 3,391,097; bis-imide containing diepoxides, U.S. Patent No. 3,45,711; epoxylated aminomethyldiphenyl oxides, U.S. Patent No. 3,312,664; heterocyclic N,N'-diglycidyl compounds, U.S. Patent No. 3,503,979; amino epoxy phosphonates, British Patent No. 1,172,916; 1,3,5-triglycidyl isocyanurates, as well as other epoxy-containing materials known in the art.

Any cationic, epoxy-amine resin adducts, as well as cationic epoxy-amine resin adducts conventionally known and used in the cathodic electrodeposition arts, can be used in the practice of the present invention including modified epoxy resins adducts. For example, the modified epoxy resins used in the practice of this invention may comprise one of the aforementioned epoxy resin compositions chain extended with water miscible or water soluble polyol, reacted with excess amine, and finally reacted with a fatty acid or aliphatic monoepoxide. These epoxy amine resin adduct compositions are disclosed in U.S. Patent Nos. 4,575,523 and 4,575,524, the disclosure of which are incorporated by reference. However, any epoxy-amine resin adducts produced by method known in the art, such as by the diketimine method as disclosed in U.S. Patent No. 3947339, and other methods may be used in the practice of the present invention.

The polyamines used in the practice of this invention to form epoxy-amine resin adducts when an "excess-amine" process is used are typical of those known in the art such as the polyamines disclosed in U.S. Patent No. 4,139,510, which is incorporated by reference.

The amine-functional acrylic copolymers useful in the practice of the present invention include copolymers of two or more of the monomers such as hydroxy ethyl acrylate, dimethyl ethyl amino methacrylate, dimethylethylamino methacrylate, styrene, butyl acrylate, ethyl acrylate and other monomers typically used to form acrylic copolymer resins. The copolymer resins will comprise copolymers of esters of methacrylic acid, $\alpha,\beta$-unsaturated monomers such as styrene, hydroxyl functional esters of acrylic acid or methacrylic acid and an amine-functional $\alpha,\beta$-unsaturated monomer, or copolymers of glycidyl methacrylate or acrylate reacted with an amine. Cathodic, electrodepositable amine-functional acrylic compositions are disclosed in U.S. Patent No. 3,883,483 which is incorporated by reference.

Sufficient quantities of blocked polyisocyanate or aminoplast cross-linking agents are incorporated into the electrodepositable coating compositions of this invention such that the deposited coating will be completely cured upon baking. Also, the coating compositions will be designed so that there will be no free isocyanate groups remaining after curing when using polyisocyanate cross-linking agents.

Typically, about 10 wt.% to about 60 wt.% of blocked polyisocyanate is incorporated based upon the total weight of the principal resin composition and cross-linking agent, more typically about 20 wt.% to about 50 wt.%, preferably about 25 wt.% to about 35 wt.%. Typically about 10 wt.% to about 60 wt.% of the aminoplast cross-linking agent is used based upon the total weight of the cross-linking agent and the principal resin compositions, preferably about 20 wt.% to about 40 wt.%.

The blocked polyisocyanates of this invention are mixed with the principal resin compositions, for example the epoxy-amine adduct or the amine-functional acrylic copolymer, by adding the blocked polyisocyanates to a vessel containing the epoxy-amine resin adduct composition or the amine-functional acrylic copolymer and mixing the charge for about one-half hour. Aminoplast cross-linking agents are typically added in a similar manner.

In order to solubilize or disperse into an emulsion cathodic electrodepositable resin composition, it is necessary to salt the amine containing resin with a water soluble acid. The acids which can be used include those known in the art such as formic acid, acetic acid, phosphoric acid, lactic acid, hydrochloric acid, etc. Sufficient quantities of the acid are mixed with the electrodepositable resin compositions to solubilize or disperse the resin composition in water. One method, which is preferred, in which the salting process is accomplished is by charging the resin composition, an acid, cosolvents, water and surfactants conventional in the art, into a vessel, and mixing the charge with a slow speed mixer,

Typically, about 0.1 Meg to about 0.8 Meq of acid is used per gram of solid resin, more typically about 0.2 Meq to about 0.7 Meq, and preferably about 0.2 Meq to about 0.5 Meq.

The principal resin solution or emulsion is typically incorporated directly into the coating bath at the coating site. Typically, a principal resin solution or emulsion of the present invention comprises about 10 wt.% about 90 wt.% of amine-epoxy resin adduct or amine functional acrylic resin, more typically about 20 wt.% to about 30.0 wt.% and preferably about 22 wt.%, although principal resins solution or emulsions having higher or lower concentrations can be used.

The concentration of cathodic, electrodepositable principal resin compositions in an aqueous, cathodic

6

electrodeposition coating bath is typically about 5 wt.% to about 50 % wt.%, more typically about 10 wt.% to about 25 wt.%, and preferably about 15 wt.%.

It should be noted that the cathodic, electrodepositable resin coating compositions are typically shipped by the manufacturer to the user as a salted aqueous dispersion having a concentration of about 20 wt.% to about 36 wt.% of solids.

The cathodic electrodepositable coating baths of this invention are typically formed by mixing the solubilized (i.e., salted) cathodic electrodepositable resin compositions of this invention in concentrate form with water, although unsalted resin could be used in baths already containing the solubilizing acid. The electrodeposition bath may contain additional ingredients such as pigments, cosolvents, antioxidants, surfactants, etc., which are typically used in electrodeposition processes known in the art. Pigment compositions may be of any conventional type and are one or more of such pigments as the iron oxides, dye, carbon black, titanium dioxide, talc, barium sulfate, barium yellow, cadmium red, chromic green, etc. Additionally, hydrophobic dyes as described in copending Patent Application Serial No. (Attorney's Docket IN-1128) can be used. Sufficient quantities of pigment are used to achieve the appearance characteristics desired such as gloss, reflectance, hue, tint and other desired characteristics. Typically, when using a pigment the amount of pigment in the coating bath is expressed in a ratio of total pigment to total binder. Typically a pigment to binder ratio of about 0.01 to about 0.95 is used in the electrodepositable resin compositions of the present invention, more typically about 0.01 to about 0.4. Pigment is typically added to the electrodeposition bath in paste form, i.e., predispersed in a paste composition comprising pigment, cathodic, electrodepositable grind composition and surfactants and additives conventional.

Sufficient quantities of the water insoluble organo-lead compounds of the present invention will be incorporated into the coating compositions of the present invention to provide sufficient corrosion resistance of the coated substrate. The organo-lead compounds may be incorporated into the principal resin solution or emulsion or into the pigment paste. When incorporated into the principal resin solution or emulsion or coating bath the weight percentage of water insoluble organo-lead to principal resin will typically be about 0.1 wt.% to about 10 wt.%, preferably about 0.5 wt.% to about 5.0 wt.% water insoluble organo-lead compounds are incorporated into a principal resin or emulsion by mixing with the principal resin or principal resin/crosslinker mixture prior to salting and dispersing in water, similarly, the water insoluble organo-lead compounds are incorporated into the pigment paste by mixing with the grind resin prier to dispersing into water.

The electrodeposition baths may contain coupling solvents which are water soluble or partially water soluble organic solvents for the resinous vehicles used in the practice of this invention. The coupling solvents or cosolvents used in the practice of this invention are those typically used and known in the art.

The smoothness of the cured coating is a function of the "flow" of the deposited coating composition. Flow is defined as the tendency of the electrodeposited coating composition to liquify during the curing operation and form a smooth cohesive film over the surface of a coated article prior to the onset cross-linking. This is accomplished in part by co-solvents.

Examples of such coupling solvents include ethylene glycol monomethyl ether, ethylene glycol monoethyl ether, ethylene glycol monobutyl ether, diethylene glycol monobutyl ether, ethanol, isopropanol, n-butanol, etc. Sufficient amounts of coupling solvent are optionally used so that a good emulsion resulting in a smooth, deposited film is produced.

The electrodeposition process typically takes place in an electrically insulated tank containing an electrically conductive anode which is attached to a direct current source. The size of the tank will depend on the size of the article to be coated. Typically, the tank is constructed of stainless steel or mild steel and lined with a dielectric coating such as epoxy impregnated fiberglass or polypropylene. The electrocoat coating compositions of this invention are typically used to coat articles such as automobile or truck bodies, car parts, applications, etc. The typical size of an electrodeposition bath tank used for this purpose can range from about several hundred to about 120,000 gallons. However, any electrically conductive article of any size ranging from fasteners such as nuts and bolts to construction equipment to structural members may be coated with the E-Coat compositions of the present invention.

Typically, the article to be coated is connected to the direct current circuit so that the electrically conductive article acts as the cathode. When the article is immersed in the coating bath, a flow of electricity across the article results in a film of the cationic electrodepositable coating composition being deposited on the surfaces of the article. The E-Coat composition has a net positive charge and is therefore attracted to the negative cathodic surface of the conductive article being coated. The thickness of the coating deposited upon the article during its residence in the cathodic E-Coat coating bath is a function of the cathodic, electrodepositable E-Coat coating composition, the voltage across the article,l the current flux, the pH of the coating bath, the conductivity, the residence time, etc. Sufficient voltage will be applied to the article for a

7

sufficient time to obtain a coating of sufficient thickness and uniform coverage. Typically, the voltage applied across the coated article is about 50 volts to about 500 volts, more typically about 200 to about 350 volts, and preferably about 225 volts to about 300. The current density is typically about 0.5 ampere per sq. ft. to about 30 amperes per sq. ft., more typically about one ampere per sq. ft. to about 25 amperes per sq. ft., and preferably about one ampere per sq. ft. The article typically remains in the coating bath for a sufficient period of time to produce a coating or film of sufficient thickness, having sufficient resistance to corrosion. The residence time or holding time is typically from about a few seconds to about a few seconds to about 3 minute, more typically about 1 minute to about 2-1/2 minutes, and preferably about 2 minutes; however, this will vary and depend upon the previously mentioned parameters.

The pH of the coating bath is sufficient to produce a coating which will not rupture under the applied voltage. That is, sufficient pH to maintain the stability of the coating bath so that the resin does not kick-out of the dispersed state and to control the conductivity of the bath. Typically, the pH is about 4 to about 7 more typically about 5 to about 6.8, and preferably about 5.5 to about 6.5.

The conductivity of the coating bath will be sufficient to produce a coated film of sufficient thickness. Typically the conductivity will be about 800 micromhos to about 3,000 micromhos, more typically about 800 micromhos to 800 micromhos to about 2,200 micromhos, and preferably about 900 micromhos to about 1,800 micromhos.

The desirable coating thicknesses are sufficient to provide resistance to corrosion while having adequate flexibility. Typically, the film thicknesses of the coated objects of this invention will be about 0.4 mil to about 1.8 mils. Thinner or thicker films may be deposited as required.

When the desired thickness of the coating has been achieved the coated article is removed from the electrodeposition bath and cured. Typically, the electrodeposited coatings are cured in a conventional convection oven at a sufficient temperature for a sufficient length of time to unblock the blocked polyisocyanates (when blocked polyisocyanates are used) and allow for cross-linking of the electrodepositable resin compositions. Typically, the coated articles will be baked at a metal temperature of about 200$^\circ$F (93$^\circ$C) to about 600$^\circ$F (315$^\circ$C), more typically about 250$^\circ$F (121$^\circ$C) to about 390$^\circ$F (199$^\circ$C), and preferably about 300$^\circ$F (149$^\circ$C) to about 375$^\circ$F (191$^\circ$C). The coated articles will be baked for a time period of about 10 minutes to about 40 minutes, more typically about ten minutes to about 35 minutes, and preferably about 15 minutes to about 30 minutes. Once again, it will be appreciated by those skilled in the art that times and temperatures will vary.

It is contemplated that the coated articles of the present invention may also be cured by using radiation, vapor curing, contact with heat transfer fluids, and equivalent methods.

It will be appreciated by those skilled in the art that each of the coating parameters may vary according to the coating composition, bath characteristics, and the size and shape of the articles, coating performance requirements and the like.

Typically the coated articles of this invention will comprise conductive substrates such as metal, including steel, aluminum, brass, gold, silver, platinum, nickel, chrome, zinc, coated steels, copper, and the like, however, any conductive substrate having a conductivity similar to the aforementioned metals may be used. The articles to be coated may comprise any shape so long as all surfaces can be wetted by the electrodeposition bath. The characteristics of the article which have an effect on the coating deposition include the shape of the article, the capacity of the surfaces to be wetted by the coating, and the degree of shielding from the anode. Shielding is defined as the degree of interference with the electromotive field produced between the cathode and the anode, thereby preventing the coating composition from being deposited in those shielded areas. A measure of the ability of the coating bath to coat remote areas of the object is throwpower. Throwpower is a function of the electrical configuration of the anode and cathode as well as the conductivity of the electrodeposition bath. High conductivity cause by soluble lead is known to decrease throw-power.

Soluble lead compounds as described in US Patent 4,115,226 such lead acetate or lead lactate tend to cause an increase in both the bath conductivity and the deposited film conductivity. This reduces the voltage at which the article can be coated without experiencing rupturing. Rupturing is a coating defect which can resemble film boiling or blowing, resulting in an unacceptable appearance and performance. The reduced rupture voltage is in part responsible for the reduced throwpower. The reduced voltage also may reduce the maximum film build obtained, which may result in poor coating performance.

The coatings of the coated articles of this invention exhibit superior smoothness, gloss, flexibility, durability and resistance to corrosion. Smoothness and gloss are related to the flow of the electrodeposited cathodic resin. Durability, flexibility and resistance to corrosion are related to the chemical nature of the electrodeposited cathodic E-Coat compositions as well as the smoothness of the deposited coatings. These coating compositions readily accept an automotive primer or an overcoat such as the industry standard inner pigmented base coat and outer clear top coat.

The aqueous E-Coat coating baths of the present invention do not contain water soluble lead compounds, lead pigments or tin catalysts. Coatings without water soluble lead compounds, lead pigments, or tin catalysts contain crosslinkers of the blocked isocyanate type do not cure to hard, solvent resistant, durable films having acceptable corrosion performance. Surprisingly, water insoluble organo-lead compounds can be used in aqueous E-Coat baths in place of water soluble lead compounds, lead pigments, or tin catalysts, and produce deposited, cured coating which have hard, durable, soluble resistant films with excellent corrosion resistance. Also surprisingly, water insoluble organo-lead compounds do not reduce the rupture voltage, decrease the throwpower, or lower the maximum film build obtainable.

It should be noted that the articles coated by the E-coat coating compositions of this invention are typically automobile bodies which have been pretreated to remove impurities and contaminants in a phosphatizing bath, however, the coating compositions may be used to coat virtually any object comprising a conductive substrate whether pretreated, precoated or not.

The following examples are illustrative of the principles and practice of this invention, although not limited thereto. Parts and percentages where used are parts and percentages by weight.

REPRESENTATIVE EXAMPLES OF TYPICAL POLYMERIC MATERIALS USEFUL IN THIS INVENTION

EXAMPLE 1

Ethyl cellosolve (290.0 parts by weight) and 106,0 parts of butyl cellosolve are charged into a reactor equipped with condenser, stirrer, thermometer, and dropping funnel. The mixture is heated to 120°-130°C and held at this temperature. To this mixture is then added, over a period of 3 hours, mixture of 580.0 parts butyl acrylate, 350.0 parts styrene, 140.0 parts N,N-dimethylaminoethyl methacrylate, 58.0 parts 2-hydroxyethyl methacrylate, and 17.0 parts α,α-azobisisobutyronitrile. A mixture of 2.0 parts t-butyl-peroxyisopropyl carbonate and 1.5 parts ethyl cellosolve is then added. The reaction is held at 120°C for 1 hour, after which a second addition of said components is added and, likewise, the reaction is permitted to continue for 1 hours, after which a third and final addition of said components is added and the reaction is permitted to continue for 2 hours.

EXAMPLE 2

A reaction vessel is charged with 727.6 parts Epon 829, 268.1 parts PCP-0200, and 36.1 parts xylene and heated with a nitrogen sparge to 210°C. The reaction is held at reflux for about 1/2 hour to remove water. The reaction mixture is cooled to 150°C and 197.8 parts bisphenol A and 1.6 parts benzyldimethylamine catalyst are added and the reaction mixture heated to 150°-190°C and held at this temperature for about 1 1/2 hours and then cooled to 130°C. Then 2.2 parts of the benzyldimethylamine catalyst are added and the reaction mixture held at 130°C for 2 1/2 hours until a reduced Gardner-Holt viscosity (50 percent resin solids solution in 2-ethoxyethanol) of P is obtained. Then 73.1 parts of a diketimine derivative derived from diethylenetriamine and methyl isobutyl ketone (73 percent solids in methyl isobutyl ketone), and 39.1 parts N-methylethanolamine are added and the temperature of the reaction mixture is brought to 110°C and held at this temperature for 1 hour. To this mixture, 76.5 parts 2-hexoxyethanol are added.

EXAMPLE 3

To a clean dry reactor, 115 parts xylene are added. The mixing liquid is blanketed with pure nitrogen and heated to 42°C. An addition of 568.1 parts of Epon 1001F (EEW = 520 - 540) is made at such a rate that the batch temperature never drops below 60°C, usually over a period of two hours. Heating is continued until 100°C. At this point, 75.9 parts dodecyl phenol are added and heated to 118°C. Vacuum drying by distillation of xylene is started at this temperature and continued while heating to 125°C. The pressure should be between 65 cm and 69 cm Hg (88 kP - 92 kP) at full vacuum. The drying stage should take between 1.0 and 1.5 hours. Break vacuum with pure nitrogen only. The batch is cooled (the sample at this point should be 94.3-95.3 % non-volatiles) and at 115°C, 1.1 parts benzyldimethylamine are added. The peak exotherm temperature should reach 129°-132°C. The temperature is maintained at 128°-132°C and the polymerization is followed by EEW titration. Every 30 minutes the reaction is sampled and is stopped at an end point of 1090-1110 EEW. The typical reaction time is three hours. Adjustments to the catalyst level may be necessary if extension period deviates more than 30 minutes from three hours. At the target EEW, 12.1 parts butyl cellosolve and 74.7 parts xylene are added followed by 42.6 parts DEOA (diethanol amine). The temperature of this reaction should not exceed 132°C. Cooling may be necessary at this point with jacket or coils. A vacuum suction is started immediately after the DEOA addition and pressure is reduced to 18 inches of Hg and held for 5 minutes. The pressure is further reduced in 2 inch Hg increments followed by short holding period until 26-27 inches of Hg is achieved. The batch is then cooled to 90°C in one hour following addition of DEOA. To achieve this, a good reflux rate should be attained in 20-25 minutes after the DEOA addition. All solvents are returned to the reactor. After one hour of vacuum cooling (T = 90°C), 40.6 parts ethylene glycol monohexyl ether and 107.7 parts isobutanol are added without breaking vacuum. The batch is cooled for 35 minutes to 57°-61°C under full vacuum to achieve the target temperature during the specified time tables. After the 35 minute cooling period, 13.3 parts of dimethylamino propylamine (DMAPA)are charged as fast as possible. The batch is kept between 54°-60°C for two hours after the exotherm. Then it is heated to 90°C over one hour and this temperature is held for one hour. The batch is then cooled to 80°C.

EXAMPLE 4

To a suitable reactor, 1881.7 parts of triethylene tetramine are added. Heat and agitation is applied and, at 104°C, 1944.8 parts of an epoxide resin solution at 59.4% solids in ethylene glycol monomethyl ether (the epoxide resin being glycidyl polyether of bisphenol A having an epoxide equivalent weight of 895) are slowly added. The epoxide resin addition is completed in 65 minutes and the temperature drops to 99°C. The temperature is slowly raised to 121°C over 45 minutes and is held between 121°-127°C for 1 hour to complete the adducting reaction. The excess unreacted amine and the solvent is removed by heating the adduct solution to 232°C under vacuum (25 mm Hg pressure). When the distillation is completed, vacuum is released and the temperature is reduced to 182°C. This is followed by the addition of 700 parts of ethylene glycol monomethyl ether, which reduces the temperature to about 118°C. When the solution is homogeneous, 458.3 parts of the glycidyl ether of mixed fatty alcohols containing predominantly n-octyl and n-decyl groups, the glycidyl ether having an epoxide equivalent weight of 229 are added at a temperature of 107°-116°C. Heating is stopped after an additional hour at 116°C. The resulting product should have a solids content of 71.3 %, and a Gardner-Holt viscosity of Z6 -Z7.

EXAMPLE 5

A blocked isocyanate (polyurethane cross-linking agent, reverse order) is prepared according to the following procedure. Slowly and with stirring in a nitrogen atmosphere, 291 parts of an 80/20 isomeric mixture of 2,4-/2,6-toluene diisocyanate, 0.08 parts of dibutyltin dilaurate and 180 parts of methyl isobutyl ketone are charged to a suitable reactor, the temperature being maintained below 38°C. The mixture is maintained at 38°C for a further half hour after which 75 parts of trimethylolpropane are added. After allowing the reaction to proceed for about 10 hours, 175 parts of ethylene glycol monopropyl ether are added and the mixture reaction kept 1.5 hours at 121°C until essentially all the isocyanate groups are reacted. This depletion is recognized from the infrared spectrum.

The normal order blocked isocyanate can be prepared by the altering of the foregoing order of addition pursuant to Example 1 of German Offenlegungsschrift 2,701,002.

EXAMPLE 6

A blocked is isocyanate crosslinker (polyurea) is prepared according to the following procedure. To a dry reactor., 483 parts of triisocyanurated hexamethylene-diisocyanate and 193 parts of 2-hexanone are charged. Dibutylamine (307 parts) is added slowly and with stirring under nitrogen atmosphere so that the temperature does not exceed 80°C. After all amine has reacted, 14 parts of n-butanol and 0.2 parts of dibutyl tin dilaurate are added.

EXAMPLE 7

A quaternizing agent for use in preparing a pigment grind resin is prepared by adding 320 parts 2-ethylhexanol half-capped toluene diisocyanate (95% solids in methyl isobutyl ketone) to 87.2 parts dimethylethanolamine in a suitable reactor at room temperature. The mixture is allowed to exotherm and is stirred for 1 hour at 80°C. Lactic acid (117.6 parts of 88% aqueous lactic acid solution) is then charged followed by the addition of 39.2 parts 2-butoxyethanol. The reaction mixture is stirred for about 1 hour at 65°C. to form the desired quaternizing agent.

The grind resin is prepared by charging 710 parts of Epon 839 and 289.6 parts of bisphenol A to a suitable reaction vessel and heated to 150°-160°C to initiate an exotherm. The reaction mixture is permitted to exotherm for 1 hour at 150°-160°C. The reaction mixture is then cooled to 85°-90°C, homogenized and then charged with 71.2 parts deionized water followed by the addition of 496.3 parts of the above described quaternizing agents. The temperature of the reaction mixture is held at 80°-85°C until an acid value of about 1 is obtained.

EXAMPLE 8

Into a reaction vessel, 27.81 parts of the diglycidyl ether of bisphenol A and 1.44 parts xylene are changed. The charge is heated to 82°C under a dry nitrogen atmosphere. The heating is discontinued, and a charge of 5.81 parts bisphenol A is added, together with 0.002 parts triphenyl phosphine catalyst. The heating of the reaction vessel is then continued to a temperature of 127°C, where the reaction begin to exotherm on its own, with a peak of about 150°-160°C. The extension is held above 150°C until an EEW of 340-360 is achieved (about 345). Once the target EEW is reached, 21.08 parts butyl cellosolve is added to the reaction vessel and the reaction mixture is then cooled to 49°C. After a temperature of 49°C is achieved, a mixture of 7.77 parts of 9-amino-3,6-dioxanonan-1-ol and 4.07 parts dimethylaminopropylamine are added to the reaction vessel cover a period of 6 minutes, followed by a pump flush of 0.53 parts ethylene glycol monobutyl ether. The batch exotherms to 104°-110°C, and the reaction mixture is then held at or below 115°C for one hour. Next, 4.92 parts butyl cellosolve are charged into the reaction vessel and the batch is cooled to 77°C. Next, 14.9 parts nonylphenolglycidyl ether are charged into the reaction vessel followed by a pump flush of 1.53 parts of ethylene glycol monobutyl ether. The batch exotherms to 88°-93°C, and the batch is then held at this temperature for one hour. Finally, 10.03 parts butyl cellosolve is charged into the reaction vessel and the batch cooled to 66°C. The resultant product is then filtered through 25 micron bags and drummed.

EXAMPLES OF THE INCORPORATION OF WATER INSOLUBLE ORGANOLEAD COMPOUNDS IN PRINCIPAL RESIN SOLUTIONS

EXAMPLE 9 - 15

This general procedure applies to the examples 9 - 15. Specific formulations for these examples are shown in Table 1. All amounts shown in Table 1 represent the weight of the non-volatile portion.

Charge a suitable mixing vessel with the crosslinker. Optionally, if a hydrophobic dye is included, the dye is added to the crosslinker with slow stirring, and is mixed for about 30 minutes. Plasticizer and organic solvents are then added to the mixture, continuing the slow agitation. Principal resin, at 21°-49°C, is then added to the continuously mixing batch. After 30 minutes of continuous stirring, the water insoluble organolead compound(s) is added. The mixing is continued uninterrupted for 30 minutes, then all remaining additives, flow agents, solvent, antifoam agents, and surfactants are added.

## TABLE 1

| INGREDIENTS | EXAMPLES | | | | | | |
|---|---|---|---|---|---|---|---|
| | 9 | 10 | 11 | 12 | 13 | 14 | 15 |
| Crosslinker (Example 5) | 30.5 | 31.0 | 15.0 | 31.0 | | 14.0 | 31.0 |
| Crosslinker (Example 6) | | | 15.0 | | | 14.0 | |
| Cymel® 1141 | | | | | 31.0 | | |
| Paraplex® WP-1 (Rohm & Haas) | 7.6 | 7.6 | 7.6 | 7.6 | 7.6 | | 7.6 |
| Orasol® RL black dye | 1.2 | | | | | 1.2 | |
| Prin. resin (Example 1) | | | | | | 67.0 | |
| Prin. Resin (Example 2) | | | | 57.3 | | | |
| Prin. resin (Example 3) | 56.6 | 57.3 | 57.3 | | | | 57.3 |
| Prin. resin (Example 4) | | | | | 57.3 | | |
| Lead (III) 2-ethyl hexanoate (42% Pb) | 1.8 | 1.8 | | | 1.8 | 1.8 | |
| Lead (III) octanoate (24% Pb) | | | 3.2 | | | | |

### (Table 1 continued)

| | 9 | 10 | 11 | 12 | 13 | 14 | 15 |
|---|---|---|---|---|---|---|---|
| Lead naphthenate (24% Pb) | | | | 3.2 | | | |
| Flow additive | 2.3 | 2.3 | 2.3 | 2.3 | 2.3 | | 2.3 |

EXAMPLE OF INCORPORATION OF WATER INSOLUBLE ORGANO-LEAD COMPOUNDS INTO PRINCIPAL RESIN EMULSIONS

EXAMPLES 16 - 23

This general procedure applies to examples 16 - 23. The specific formulations for these examples are shown in Table 2.

First, principal resin solutions containing the crosslinker, plasticizer, the organo-lead compound(s), and other applicable ingredients are mixed together as described for the previous set of examples (9 - 14). A solubilizing acid is then added to the principal resin solution, and then the resultant solubilized principal resin solution is then mixed with deionized water, or optionally, a deionized water/surfactant mixture.

## TABLE 2

| INGREDIENTS | EXAMPLES | | | | | | | |
|---|---|---|---|---|---|---|---|---|
| | 16 | 17 | 18 | 19 | 20 | 21 | 22 | 23 |
| Example 9 (74% NV) | 269.7 | | | | | | | |
| Example 10 (74% NV) | | 269.7 | 269.7 | | | | | |
| Example 11 (74% NV) | | | | 269.7 | | | | |
| Example 12 (74% NV) | | | | | 269.7 | | | |
| Example 13 (74% NV) | | | | | | 269.7 | | |
| Example 14 (74% NV) | | | | | | | 269.7 | |
| Example 15 (74% NV) | | | | | | | | 269.7 |

### (Table 2 continued)

| | 16 | 17 | 18 | 19 | 20 | 21 | 22 | 23 |
|---|---|---|---|---|---|---|---|---|
| Acetic Acid (Glacial) | 2.53 | 2.53 | | 2.53 | 3.19 | 2.92 | 3.31 | 2.53 |
| Lactic acid (85%) | | | 4.46 | | | | | |
| Deionized water | 298.0 | 298.0 | 296.1 | 298.0 | 297.3 | 297.6 | 297.2 | 298.0 |

EXAMPLES OF PIGMENT PASTES, WITH AND WITHOUT THE INCORPORATION OF WATER INSOLUBLE ORGANO-LEAD COMPOUNDS

EXAMPLE 24

To a suitable mixing vessel, 198.3 parts of grind resin from Example 8 are mixed with 11.1 parts acetic acid, 7.0 parts of Tristar 27 defoamer (Tristar Chemical Co., Dallas, TX), and 342.6 parts deionised water. Once homogeneous, 12.6 parts carbon black, 63.0 parts clay extender, and 329.7 parts titanium dioxide are dispersed into the mixture. Using a high speed Cowles disperser, sandmill, ballmill, or other pigment dispersing equipment, a fineness of grind (F.O.G.) of 5-7 is obtained.

EXAMPLE 25

To a suitable mixing vessel, 226.36 of grind resin from Example 7 are mixed with 388.9 parts of deionized water, 16.54 parts carbon black, and 564.31 parts titanium dioxide. The mixture is ground until a Hegman fineness of grind of 5 - 7 is obtained.

EXAMPLE 26

To a suitable mixing vessel, 198.3 parts of grind resin from Example 8 are mixed with 27.2 parts of Lead-2-Ethylhexanoate, and stirred for about 30 minutes. Then, 11.1 parts acetic acid, 7.0 parts of Tristar 27 defoamer, and 342.6 parts deionized water are added, continuing the mixing. Once homogeneous, 12.6 parts carbon black, 63.0 parts clay extender, and 329.7 parts titanium dioxide are added and dispersed to a Hegman fineness of grind of 5 - 7.

EXAMPLE OF CATHODIC PAINTS CONTAINING WATER INSOLUBLE LEAD COMPOUNDS

EXAMPLES 27 - 34

Example are prepared according to the formulations outlined in Table 3.

## TABLE 3

| INGREDIENTS | EXAMPLE | | | | | | | |
|---|---|---|---|---|---|---|---|---|
| | 27 | 28 | 29 | 30 | 31 | 32 | 33 | 34 |
| Emulsion (Example 16) | 571.4 | | | | | | | |
| Emulsion (Example 17) | | 400.7 | | | | | | |
| Emulsion (Example 18) | | | 413.2 | | | | | |
| Emulsion (Example 19) | | | | 400.7 | | | | |
| Emulsion (Example 20) | | | | | 413.2 | | | |
| Emulsion (Example 21) | | | | | | 400.7 | | |
| Emulsion (Example 22) | | | | | | | | |
| Emulsion (Example 23) | | | | | | | 571.4 | 400.2 |
| Paste (Example 24) | 109.8 | | 109.8 | | 109.8 | | | |
| Paste (Example 25) | | 95.0 | | 95.0 | | | | |
| Paste (Example 26) | | | | | | | | 112.0 |
| Deionized water | 428.6 | 489.5 | 491.8 | 489.5 | 491.8 | 489.5 | 428.6 | 487.8 |
| Total | 1000 | 1000 | 1000 | 1000 | 1000 | 1000 | 1000 | 1000 |

Although this invention has been shown and described with respect to the detailed embodiments thereof, it will be understood by those skilled in the art that various changes in form and detail thereof may be made without departing from the spirit and scope of this invention.

Claims

1. A cathodic, electrodepositable resinous coating composition comprising

a cationic electrodepositable resin composition;

a cross linking agent; and

an organo-lead compound comprising a water insoluble lead salt of an aliphatic acid having at least six carbon atoms or an insoluble lead salt of an aromatic carboxylic acid, which is either a liquid or which becomes a liquid solution on mixing with a suitable solvent or oil or which becomes a liquid-like paste on mixing with a suitable organic solvent or oil;

the composition when deposited as a film on a conductive substrate in an aqueous, cathodic electrodeposition process and when cured does not require any additional catalyst and cures to a hard, durable film having excellent corrosion resistance.

2. A coating composition according to claim 1, characterized by the fact that the resin composition is selected from the group consisting of, amine epoxy resin adducts and amine functional acrylic resins.

3. A coating composition according to claim 1 or 2, characterized by the fact that the cross-linking agent is selected from the group consisting of blocked polyisocyanates, blocked polyether polyol polyisocyanate adducts, alkanol blocked melamine resins and alkanol blocked urea formaldehyde resins.

4. A coating composition according to any one of claims 1 to 3, characterized by the fact that the organo-lead compound is selected from the group consisting of lead 2-ethyl hexanoate, lead naphthenate, lead octanoate, lead dodecanoate, lead oleate, and lead stearate.

5. A coating composition according to any one of claims 1 to 4, characterized by the fact that it is in the form of an aqueous bath.

6. A coated article characterized by the fact that the article is coated with an aqueous, cathodic electro-depositable resinous coating composition according to any one of claims 1 to 5.

7. A method of cathodic electrodeposition of aqueous coating compositions comprising forming an aqueous cathodic electrodeposition coating bath, wherein the coating bath comprises an aqueous cationic, electrodepositable resin compositions and a cross-linking agent, said bath contained in an electrically insulated vessel containing an anode, then connecting a conductive article to an electrical circuit to act as a cathode and immersing the article in the bath, and causing sufficient power to flow across the article so that a film of coating composition is deposited upon the surfaces of the article to a sufficient thickness, then removing the article and curing the film to a hard, durable coating;

characterized by including in the coating bath at least one organo-lead composition comprising an insoluble lead salt of an aliphatic acid having at least six carbon atoms an insoluble lead salt of an aromatic carboxylic acid, the resulting coating containing the organo-lead having excellent corrosion resistance.

8. A method according to claim 7, characterized by the fact that the resin composition is selected from the group consisting of amine epoxy resin adducts and amine functional acrylic resins.

9. A method according to claim 7 or 8, characterized by the fact that the cross-linking agent is selected from the group consisting of blocked polyisocyanates, blocked polyether polyol polyisocyanate adducts, alkanol blocked melamine resins an alkanol blocked urea formaldehyde resins.

10. A method according to any one of claims 7 to 9, characterized by the fact that the organo-lead compound is selected from the group consisting of lead 2-ethyl hexanoate, lead naphthenate, lead octanoate and lead dodecanoate, lead oleate, lead stearate.

16

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 262 772 (NIPPON PAINT CO., LTD) <br> * Claim 1; page 7, lines 40-53; page 8, lines 1-5 * <br> – – – | | C 09 D 5/44 |
| A | EP-A-0 212 633 (HERBERTS GmbH) <br> * Claims 1,8 * <br> – – – | | |
| A | FR-A-2 526 051 (NIPPON PAINT CO., LTD) <br> – – – – – | | |

TECHNICAL FIELDS SEARCHED (Int. Cl.5)

C 09 D

The present search report has been drawn up for all claims

| Place of search | Date of completion of search | Examiner |
|---|---|---|
| The Hague | 16 November 90 | BUSCAGLIONE Y. |